# EUROPÄISCHE PATENTANMELDUNG

(11) **EP 4 230 024 A1**
(43) Veröffentlichungstag der Anmeldung: **23.08.2023**
(21) Anmeldenummer: 22215078.1
(22) Anmeldetag: 20.12.2022
(51) Int. Cl.: A01F 7/06, A01F 12/10

(54) **SELBSTFAHRENDER MÄHDRESCHER**

(30) Priorität: 21.02.2022 DE 102022103983
(71) Anmelder: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE)
(74) Vertreter: CLAAS Gruppe

(57) **Zusammenfassung**

Die Erfindung betrifft einen selbstfahrenden Mähdrescher (1), umfassend eine tangentiale Drescheinrichtung (2) sowie eine axiale Trenneinrichtung (3). Hierbei weist die Drescheinrichtung (2) eine tangentiale Vortrommel (4), eine in Strömungsrichtung eines Erntegutstroms der Vortrommel (4) nachgeschaltete tangentiale Dreschtrommel (5) sowie einen sowohl die Vortrommel (5) als auch die Dreschtrommel (5) zumindest bereichsweise ummantelnden Abscheidekorb (6) auf. Außerdem ist die Trenneinrichtung (3) in Strömungsrichtung des Erntegutstroms (32) betrachtet der Drescheinrichtung (2) nachgeschaltet und umfasst mindestens einen axialen Trennrotor (7, 8).

Erfindungsgemäß ist vorgesehen, dass die Vortrommel (4) in einem Mittenbereich (14) umfangsseitig verteilte Gutleitelemente (15) aufweist, die dazu geeignet sind, einen der Vortrommel (4) zugeführten Erntegutstrom (32) zu beiden Seiten (16, 17) des Mittenbereichs (14) hin abzulenken.

## Beschreibung

Die vorliegende Anmeldung betrifft einen Mähdrescher gemäß dem Oberbegriff von Anspruch 1. Ein Mähdrescher ist eine landwirtschaftliche Erntemaschine zum Mähen und anschließendem Dreschen von auf einem Feld wachsenden Erntegut. Mittels des Mähdreschers werden beispielsweise Getreide- oder Samenkörner gedroschen, das heißt von Erntegutresten, beispielsweise in Form von Stroh, separiert. Außerdem kommt der Mähdrescher zur Reinigung von Körnern und Samen von Spreu sowie zur Ablage des Strohs in Schwaden zur späteren Bergung als Einstreu zum Einsatz. Alternativ werden die Erntegutreste mittels eines Häckselorgans des Mähdreschers gehäckselt und flächig zur Naturdüngung auf dem Feld verteilt.

Ein derartiger Mähdrescher kann ein Schneidwerk umfassen, mittels dessen das auf dem Feld wachsende Erntegut abgeschnitten und aufgenommen wird. Außerdem kann der Mähdrescher einen Schrägförderer aufweisen, mittels dessen das geerntete Erntegut von dem Schneidwerk übernommen und in Richtung einer Drescheinrichtung abtransportiert wird. Jedenfalls umfasst der Mähdrescher eine tangentiale Drescheinrichtung sowie eine axiale Trenneinrichtung, wobei - für den Fall, dass ein Schrägförderer vorhanden ist - die Drescheinrichtung derart mit dem Schrägförderer in Verbindung steht, dass diese von dem Schrägförderer mit Erntegut beschickt wird. Die tangentiale Drescheinrichtung umfasst eine tangentiale Vortrommel sowie eine tangentiale Dreschtrommel, wobei Längsachsen beider Trommeln bzw. deren Wellen zumindest im Wesentlichen quer zu einer Längsrichtung des Mähdreschers ausgerichtet sind. Dementsprechend werden die Trommeln im Zuge einer Förderung des Ernteguts in Längsrichtung des Mähdreschers von vorne nach hinten tangential bezogen auf einen gedachten, von der jeweiligen Trommel definierten Rotationszylinder mit Erntegut beschickt. Die axiale Trenneinrichtung ist dementsprechend zumindest im Wesentlichen parallel zu der Längsrichtung des Mähdreschers orientiert.

Die Vortrommel ist in Strömungsrichtung eines Erntegutstroms der Dreschtrommel vorgeschaltet. Ferner weist der Mähdrescher einen sowohl die Vortrommel als auch die Dreschtrommel zumindest bereichsweise ummantelnden Abscheidekorb auf. Dadurch, dass die Vortrommel und die Dreschtrommel drehangetrieben werden und somit das Erntegut insbesondere in radiale Richtung wegschleudern würden, ist es nötig, dieses mittels des Abscheidekorbs aufzufangen. Der Erntegutstrom wird somit in einem Dreschspalt geführt, der sich zwischen der jeweiligen Trommel und dem Abscheidekorb erstreckt. Der Abscheidekorb ist dabei derart beschaffen, dass bereits ein wesentlicher Teil der von den Pflanzenresten abgetrennten Körner unmittelbar durch den Abscheidekorb noch im Bereich der Drescheinrichtung zwecks Sammlung, insbesondere in einem Korntank, abgeschieden wird.

Weiterhin ist die Trenneinrichtung in Strömungsrichtung des Erntegutstroms betrachtet der Drescheinrichtung nachgeschaltet und umfasst mindestens einen axialen Trennrotor. Mit anderen Worten wird das Erntegut zuerst vom Feld aufgenommen, sodann mittels des Schrägförderers an die Vortrommel und die Dreschtrommel übergeben, mittels der es gedroschen wird, und anschließend an die Trenneinrichtung weitergeleitet, mittels der das Erntegut getrennt wird, wobei nach Möglichkeit die gewünschten Körner von unerwünschten Pflanzenresten getrennt werden. Hierfür ist typischerweise eine Zuführtrommel vorgesehen, die der Dreschtrommel nachgeschaltet ist und das gedroschene Erntegut an die Trenneinrichtung übergibt.

Dem Stand der Technik sind derartige Mähdrescher in vielfältiger Ausgestaltung als bekannt zu entnehmen. Beispielsweise ist der DE 35 37 959 C2 ein selbstfahrender Mähdrescher mit vorderer Gutzuführung und einer im Axialfluss arbeitenden sich in Längsrichtung des Mähdreschers erstreckenden Trenneinrichtung, die aus zumindest einem Rotor und einem diesen umschließenden mit einer Aufgabe- und einer Auslassöffnung versehenen Siebmantelgehäuse besteht, als bekannt zu entnehmen. Dieses Siebmantelgehäuse ist in seinem oberen Bereich mit parallel zueinander und wendelförmig verlaufenden inneren Leitschienen versehen. Hierbei sind Auflaufenden der Leitschienen mindestens zweier Leitschienengruppen in Laufrichtung der Schienen zueinander versetzt angeordnet. Der Mähdrescher umfasst eine im Tangentialfluss arbeitende Drescheinrichtung, die eine Dreschtrommel und einen Dreschkorb umfasst. Hierbei wird das in dieser Drescheinrichtung ausgedroschene Stroh von der Dreschtrommel in die Aufgabeöffnung eines Siebmantelgehäuses geschleudert. Dieses umgibt einen mit Leisten besetzten Trennrotor, wobei dieser im Bereich der Aufgabeöffnung konisch ausgebildet und mit einem Einzugsschneckenblech besetzt ist.

Außerdem ist der EP 3 031 316 B1 eine Dreschtrommel als bekannt zu entnehmen, die einen zumindest aus einem zylindrischen Grundelement gebildeten Trommelkörper umfasst, über dessen oder deren Umfang verteilt mehrere, zueinander beabstandete Schlagleisten angeordnet sind. Diese erstrecken sich über die Breite des Trommelkörpers und überragen diesen in radialer Richtung abschnittsweise. Hierbei ist weiterhin vorgesehen, dass zwischen zwei zueinander beabstandeten Schlagleisten jeweils zumindest ein sich in radialer und zumindest abschnittsweise in tangentialer Richtung erstreckendes Leitelement angeordnet ist. Dieses Leitelement ist zu einer senkrecht zur Rotationsachse des Dreschtrommel stehenden Bezugsebene unter einem Winkel zu dieser geneigt. Außerdem kann es vorgesehen sein, dass das jeweilige Leitelement derart auf der Dreschtrommel ausgerichtet ist, dass es einen sich in Rotationsrichtung der Dreschtrommel verjüngenden Verlauf in Bezug auf die Bezugsebene aufweist.

Nachteilig bei dem vorgenannten Stand der Technik ist, dass eine Umlenkung des Erntegutstroms von der tangentialen Drescheinrichtung zur axialen Trenneinrichtung unzureichend ist. In diesem Zusammenhang kann es insbesondere in einem vorderen Bereich der Trenneinrichtung zu Verstopfungen kommen, insbesondere wenn die axiale Trenneinrichtung mehrere Trennrotoren umfasst und das Erntegut nicht gleichmäßig auf diese aufgeteilt wird.

Es ist Aufgabe der vorliegenden Erfindung, die Nachteile des Stands der Technik zu beseitigen und einen Mähdrescher bereitzustellen, der eine besonders hohe Durchsatzleistung bereitstellen kann.

Die vorliegende Aufgabe wird durch einen selbstfahrenden Mähdrescher gemäß dem Anspruch 1 gelöst. Vorteilhafte Ausgestaltungen sind Gegenstand der Unteransprüche.

Es ist erfindungsgemäß vorgesehen, dass die Vortrommel in einem Mittenbereich umfangsseitig verteilte Gutleitelemente aufweist, die dazu geeignet sind, einen der Vortrommel zugeführten Erntegutstrom zu beiden Seiten des Mittenbereichs hin abzulenken. Wie bereits vorstehend erläutert, kann die Trenneinrichtung mehrere, insbesondere genau zwei, Trennrotoren aufweisen. Mittels der Gutleitelemente ist es erfindungsgemäß möglich, den Erntegutstrom derart zu teilen, dass dieser bereits in der Vortrommel für eine Zuführung in den jeweiligen Trennrotor der Trenneinrichtung vorbereitet wird. Mit anderen Worten wird der Erntegutstrom bereits in der Vortrommel mittels der Gutleitelemente derart gelenkt, dass der Erntegutstrom zumindest im Wesentlichen gleichmäßig geteilt wird. Hierbei strömt der Erntegutstrom an den Gutleitelementen ab beziehungsweise wird von diesen gelenkt, sodass sich der Erntegutstrom in Flussrichtung betrachtet aufspaltet, insbesondere rechts und links von den Gutleitelementen. Hierdurch wird der Erntegutstrom derart geteilt und ausgerichtet, dass jeweils ein Teil des Erntegutstroms einem Trennrotor zugeordnet ist. Dadurch ergibt sich der Vorteil, dass das Erntegut der Trenneinrichtung besonders zielgerichtet zugeführt werden kann. Insbesondere kann die üblicherweise einem Dreschorgan zugehörige Zuführtrommel entfallen, mittels der normalerweise ein von der Dreschtrommel übernommener Erntegutstrom an das nachgelagerte Trennorgan übergeben wird. Durch den Wegfall der Zuführtrommel ergibt sich mehr Raum für das Trennorgan und eine Einsparung von Antriebsenergie, die ansonsten von der Zuführtrommel verbraucht würde.

Gemäß einer besonders vorteilhaften Ausgestaltung der Erfindung ist vorgesehen, dass zumindest ein Leitabschnitt mindestens eines der Gutleitelemente, vorzugsweise einer Mehrzahl der Gutleitelemente, weiter vorzugsweise sämtlicher Gutleitelemente, sich in Drehrichtung der Vortrommel betrachtet ausgehend von dem Mittenbereich der Vortrommel schräg in Richtung eines Seitenbereichs der Vortrommel erstreckt. Mit anderen Worten weisen die Gutleitelemente eine sich aufweitende Form auf. Vorteilhafterweise ermöglichen die derart ausgestaltenten Gutleitelemente einen besonders einfachen Eingriff in den Erntegutstrom. Durch die sich aufweitende Form greift das jeweilige Gutleitelement mit einem zumindest im Wesentlichen spitz zulaufenden vorderen Ende in den Erntegutstrom ein und verdrängt beziehungsweise leitet diesen anschließend entlang der vorstehend beschriebenen Kontur der Leitabschnitte zu den Seitenbereichen der Vortrommel. In Versuchen hat sich gezeigt, dass der Erntegutstrom auf diese Weise besonders schonend und energiearm zu den Seiten geleitet werden kann. Hierdurch ergibt sich der Vorteil, dass das Erntegut besonders beschädigungsfrei behandelt und der Mähdrescher besonders energieeffizient betrieben werden können.

Ein weiterer Vorteil ergibt sich dann, wenn mindestens ein Gutleitelement, vorzugsweise eine Mehrzahl der Gutleitelemente, weiter vorzugsweise sämtliche Gutleitelemente, keilförmig ausgebildet ist bzw. sind, wobei ein spitz zulaufender Vorderabschnitt des jeweiligen Gutleitelements in Drehrichtung der Vortrommel gerichtet ist und das jeweilige Gutleitelement sich ausgehend von dem Vorderabschnitt keilförmig aufweitet. Mit anderen Worten ergeben die Leitabschnitte zusammengenommen eine Keilform, wobei eine Keilspitze gewissermaßen in den Erntegutstrom eingreift, mithin diesen "spaltet", und ein hinterer Keilbereich die tatsächliche seitliche Ablenkung der nunmehr getrennten Erntegutstromteile bewirken. Auf diese Weise wird der Erntegutstrom besonders widerstandsarm geteilt und kann entlang einer Kontur insbesondere des zweiten Leitabschnittes geleitet werden. Hierdurch ergibt sich der Vorteil, dass der Erntegutstrom besonders leichtgängig geleitet werden kann und somit Verstopfungen beziehungsweise Blockaden besonders zuverlässig vermieden werden können.

Vorteilhafterweise ist in einer weiteren Ausgestaltung der Erfindung vorgesehen, dass der Abscheidekorb in einem Frontbereich, in dem er mit der Vortrommel zusammenwirkt, mindestens ein in Richtung der Vortrommel vorstehendes Trennelement aufweist, wobei das Trennelement mittig in dem Frontbereich angeordnet ist, sodass das Trennelement mit dem Mittenbereich der Vortrommel zusammenwirkt. In diesem Zusammenhang sind das Trennelement und die Vortrommel beispielsweise fluchtend ausgerichtet. Das Trennelement kann beispielsweise zahnförmig ausgebildet sein, wobei eine obere Kante zumindest im Wesentlichen parallel zur Strömungsrichtung des Erntegutstroms ausgerichtet ist. Mit anderen Worten wirken das Trennelement und die Gutleitelemente der Vortrommel derart zusammen, dass das Trennelement die Teilung des Erntegutstroms unterstütz, sodass dieser besser in Richtung zu den Seiten der Vortrommel lenkbar ist. Hierdurch ergibt sich der Vorteil, dass der Erntegutstrom besonders präzise geleitet werden kann und somit Verstopfungen besonders zuverlässig vermieden werden können.

Ein weiterer Vorteil ergibt sich dann, wenn eine Mehrzahl von Trennelementen vorgesehen ist, die in Strömungsrichtung des Erntegutstroms betrachtet hintereinander in dem Frontbereich angeordnet sind. Die Trennelemente bilden in diesem Zusammenhang eine Reihe, wobei diese fluchtend hintereinander und zumindest im Wesentlichen parallel zur Strömungsrichtung des Erntegutstroms ausgerichtet sind. Hierbei können die Trennelement in Bezug auf die Länge des Frontbereichs gleichmäßig, das heißt in demselben Abstand zueinander angeordnet sein. Durch die vorgenannte Ausgestaltung ergibt sich der Vorteil, dass der Erntegutstrom besonders zielgerichtet geleitet werden kann.

Gemäß einer weiteren besonders vorteilhaften Ausgestaltung ist vorgesehen, dass die Gutleitelemente jeweils einen Passierspalt aufweisen, der des während eines bestimmungsgemäßen Betriebs des Mähdreschers ermöglicht, dass das mindestens eine Trennelement im Zuge der Rotation der Vortrommel durch den Passierspalt hindurchtritt. Auf diese Weise können die Trennelemente mit den Gutleitelementen zusammenwirken, mithin derart, dass die Trennelemente zumindest teilweise in Eingriff mit den Gutleitelementen können, nämlich indem die Trennelemente das Gutleitelement im Zuge eines Drehantriebs der Vortrommel im Passierspalt passieren. Hierdurch können die Gutleitelemente in besonders geringem Abstand zu den Trennelementen geführt werden. In Versuchen hat sich gezeigt, dass der Erntegutstrom hierdurch besonders ruhig geführt werden kann. Dies hat in vorteilhafter Weise zur Folge, dass einerseits das Erntegut besonders schonend behandelt werden und andererseits der Mähdrescher besonders gleichmäßig betrieben werden können.

In einer weiteren besonders vorteilhaften Ausgestaltung ist vorgesehen, dass der Abscheidekorb in einem der Trenneinrichtung zugewandten Endbereich ein Korbsegment umfasst, das an ein der Drescheinrichtung zugewandtes Ende eines Einlaufkopfs der Trenneinrichtung anschließt, sodass der Erntegutstrom von der Drescheinrichtung unmittelbar an die Trenneinrichtung übergebbar ist. Auf eine Zuführtrommel kann entsprechend verzichtet werden. Der Einlaufkopf bildet demzufolge ein in Richtung des Erntegutstroms betrachtet vorderes Ende der Trenneinrichtung. Die Trenneinrichtung kann beispielsweise zumindest im Wesentlichen röhrenförmig ausgebildet sein und insbesondere zwei Trennrotoren, einen je Röhre, umfassen.

Mit anderen Worten leitet beziehungsweise führt das Korbsegment das Erntegut in die Trenneinrichtung hinein, insbesondere in einen vorderen Bereich derselben. Durch die vorgenannte Ausgestaltung ergibt sich der Vorteil, dass das Erntegut der Trenneinrichtung besonders zielgenau und gleichmäßig zugeführt werden kann, sodass diese besonders effizient betrieben werden kann. Insbesondere kann das Erntegut über das Korbsegment, das an den Einlaufkopf anschließt, von unten her, das heißt in Form einer aufwärts gerichteten Bewegung, der Trenneinrichtung zugeführt werden, wobei der mindestens eine Trennrotor das Erntegut unmittelbar übernehmen und bearbeiten kann. Die Trenneinrichtung wird auf diese Weise effizienter genutzt als im Stand der Technik, da der der jeweilige Trennrotor besser ausgenutzt wird.

Außerdem hat sich in Versuchen gezeigt, dass infolge des Weglassens der Zuführtrommel der Körnerbruch gegenüber dem Stand der Technik reduziert werden kann, wodurch die Produktivität des Mähdreschers erhöht wird, da bei gleicher Menge geernteten Ernteguts ein höherer Ertrag verwertbarer Körner generiert wird.

Ein weiterer Vorteil ergibt sich dann, wenn der Einlaufkopf mindestens einen in Querrichtung des Mähdreschers betrachtet mittig angeordneten Gutstromteiler umfasst, mittels dessen ein von der Drescheinrichtung an die Trenneinrichtung übergebener Erntegutstrom teilbar ist. Der Gutstromteiler ist in diesem Zusammenhang derart an dem Einlaufkopf angeordnet, dass er das Erntegut aufteilen und somit jeweils eine der Röhren bzw. einen der Trennrotoren beschicken kann.

In einer weiteren besonders vorteilhaften Ausgestaltung der Erfindung ist vorgesehen, dass sich der Gutstromteiler bis an einen dem Abscheidekorb zugewandten Rand des Einlaufkopfs erstreckt. Der Gutstromteiler schließt somit besonders nah, insbesondere zumindest im Wesentlichen lückenlos, an dem Rand des Einlaufkopfs ab. Auf diese Weise kann der Erntegutstrom unmittelbar bei seinem Übergang von dem Korbsegment an die Trenneinrichtung mittels des Gutstromteilers beeinflusst und verteilt werden, beispielsweis auf zwei Röhren der Trenneinrichtung. Hierdurch ergibt sich der Vorteil, dass der Einlaufkopf besonders günstig in Eingriff mit dem eingeleiteten Erntegut kommt. Hierdurch wird insbesondere verhindert, dass sich in einem Bereich des Einlaufkopfes Verstopfungen und/oder Ansammlungen von Erntegut ergeben, die zu einer Behinderung des Erntegutflusses im Bereich des Einlaufkopfes führen können. Durch die vorgenannte Ausgestaltung kann dies verhindert werden, da nämlich das Erntegut besonders gleichmäßig und zielgenau zugeführt wird, sodass der Mähdrescher vorteilhafterweise besonders störungsunanfällig betrieben werden kann.

Gemäß einer weiteren besonders vorteilhaften Ausgestaltung der Erfindung ist vorgesehen, dass der Einlaufkopf zwei Zuführabschnitte aufweist, durch die hindurch der von der Drescheinrichtung übernommene Erntegutstrom dem mindestens einen Trennrotor zuführbar ist. Mit anderen Worten wird der Erntegutstrom mittels des Gutstromteilers in zwei Erntegutstromteile geteilt und diese sodann getrennt dem mindestens einen Trennrotor zugeführt. In Versuchen hat sich gezeigt, dass hierdurch eine besonders gute Umwälzung des Ernteguts realisiert werden kann. Dies hat den Vorteil, dass die Trenneinrichtung besonders effizient betrieben werden kann, sodass deren Durchsatzleistung besonders hoch ist.

Ein weiterer Vorteil ergibt sich dann, wenn die Trenneinrichtung zwei in Längsrichtung des Mähdreschers betrachtet nebeneinander angeordnete axiale Trennrotoren umfasst, wobei die Zuführabschnitte des Einlaufkopfs jeweils einem der Trennrotoren zugeordnet sind. Dadurch, dass der Erntegutstrom nicht von einem Trennrotor, sondern von zwei Trennrotoren behandelt wird, werden die jeweiligen Trennrotoren entsprechend weniger belastet. In diesem Zusammenhang kann der Erntegutstrom mittels des Gutstromteilers insbesondere in zwei zumindest im Wesentlichen gleiche Erntegutstromteile geteilt werden. Mit anderen Worten wird jedem der Trennrotoren zumindest im Wesentlichen ein gleich großer Massenstrom des Ernteguts zugeführt. Hierdurch kann eine Antriebsleistung der Trennrotoren reduziert werden, da je Trennrotor ein geringerer Erntegutstrom verarbeitet werden muss. Demzufolge muss je Trennrotor weniger Drehmoment bereitgestellt beziehungsweise aufgewendet werden, sodass die Trennrotoren mit einer höheren Drehzahl betrieben werden können. Dies hat zum Vorteil, dass die Durchsatzleistung der Trenneinrichtung besonders hoch ist und der Mähdrescher somit besonders durchsatzstark betrieben werden kann.

Gemäß einer weiteren besonders vorteilhaften Ausgestaltung ist vorgesehen, dass der Einlaufkopf einen Gutstromteiler aufweist, der mittig zwischen den Zuführabschnitten angeordnet ist, sodass der Erntegutstrom mittels des Gutstromteilers zu den beiden Zuführabschnitten hin teilbar ist. Auf diese Weise lässt sich der Erntegutstrom besonders einfach in zwei zumindest im Wesentlichen gleiche Erntegutstromteile teilen. Sofern mehrere Trennrotoren vorhanden sind, ist hierdurch der Vorteil gegeben, dass diese gleichmäßig mit Erntegut beschickt werden und somit zumindest im Wesentlichen gleich ausgelastet werden können. Die Vorteile sind bereits vorstehend genannt.

Weiterhin ist gemäß einer besonders vorteilhaften Ausgestaltung vorgesehen, dass der Abscheidekorb in seiner Ausrichtung relativ zu der Dreschtrommel änderbar ist. In Abhängigkeit beispielsweise von dem Erntegutstrom, also wie viel Erntegut pro Zeit befördert wird, kann es erforderlich sein, einen Abstand zwischen Dreschtrommel und Abscheidekorb zu verändern. In diesem Zusammenhang ist es denkbar, den Abstand zwischen Dreschtrommel und Abscheidetrommel zu vergrößern, wenn mehr Erntegut befördert wird, und den Abstand zu verringern, wenn weniger Erntegut befördert wird. Auf diese Weise kann die Arbeitsweise der Drescheinrichtung optimiert werden, da für das Erreichen einer optimalen Dreschleistung ein Dreschspalt zwischen der Dreschtrommel und dem Abscheidekorb möglichst voll gefüllt sein sollte, das heißt insbesondere nicht zu leer, ohne jedoch das Erntegut zu stark zwischen der Dreschtrommel und dem Abscheidekorb verdichten zu müssen, um den Erntegutstrom bearbeiten zu können. Hierdurch ergibt sich der Vorteil, dass der Mähdrescher besonders bedarfsgerecht betrieben werden kann.

In einer weiteren besonders vorteilhaften Ausgestaltung ist vorgesehen, dass das Korbsegment bündig an das der Drescheinrichtung zugewandte Ende des Einlaufkopfs anschließt. Dies hat zum Vorteil, dass das Erntegut besonders verlustfrei an die Trenneinrichtung weitergeleitet werden kann. Außerdem wird der Erntegutstrom nicht durch vorstehende oder rückspringende Kanten negativ beeinflusst.

Die Erfindung ist nachstehend anhand eines Ausführungsbeispiels, das in den Figuren dargestellt ist, näher erläutert. Es zeigt:
- Fig. 1:: eine schematische Seitenansicht eines Mähdreschers gemäß dem Stand der Technik;
- Fig. 2:: eine schematische Schnittansicht einzelner Arbeitsorgane eines Mähdreschers gemäß dem Stand der Technik von der Seite;
- Fig. 3:: eine schematische Schnittansicht einzelner Arbeitsorgane eines erfindungsgemäßen Mähdreschers von der Seite;
- Fig. 4:: eine schematische Schnittansicht einer Drescheinrichtung;
- Fig. 5:: eine schematische Perspektivansicht der Drescheinrichtung und einer Trenneinrichtung;
- Fig. 6:: eine schematische Draufsicht der Drescheinrichtung.
- Fig. 7:: eine schematische Draufsicht der Drescheinrichtung und der Trenneinrichtung;
- Fig. 8:: eine schematische Perspektivansicht der Vortrommel in vier verschiedenen Ausgestaltungen;
- Fig. 9:: eine schematische Perspektivansicht von Trennelementen;
- Fig. 10:: eine schematische Ansicht der Vortrommel, wobei ein Gutleitelement in Eingriff mit dem Trennelement ist;
- Fig. 11:: eine schematische Detailansicht des Gutleitelements mit einem Passierspalt;
- Fig. 12:: eine schematische Ansicht der Vortrommel in Eingriff mit den Trennelementen von der Seite; und
- Fig. 13:: eine schematische Ansicht eines Einlaufkopfes.

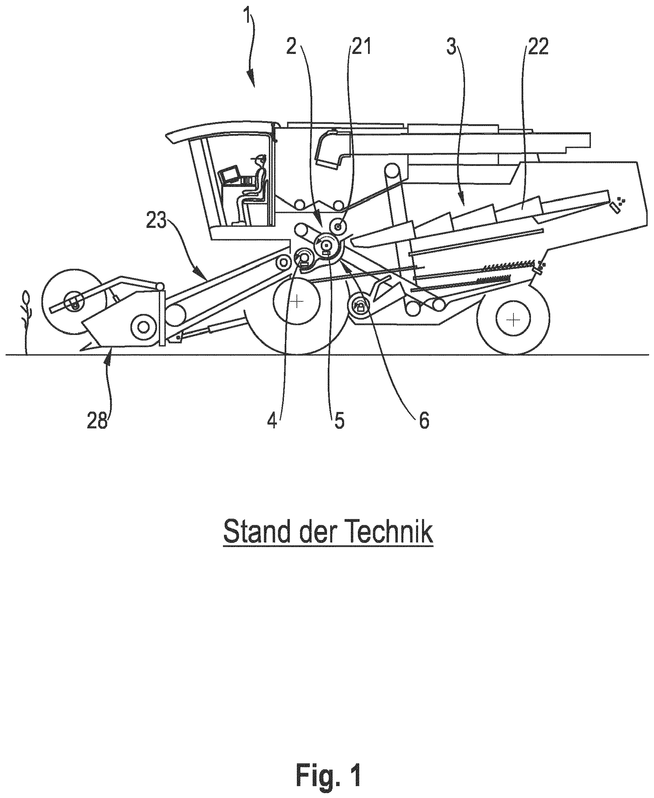

**Figur 1** zeigt in einer schematischen Seitenansicht einen Mähdrescher **1** gemäß dem Stand der Technik. Hierbei handelt es sich um einen selbstfahrenden Mähdrescher **1,** das heißt dieser weist einen Antrieb auf, mittels dessen der Mähdrescher **1** angetrieben werden kann.

Der Mähdrescher **1** ist dazu ausgebildet, auf einem Feld wachsendes Erntegut abzuschneiden, aufzunehmen und anschließend zu dreschen. In der Praxis handelt es sich bei dem Erntegut insbesondere um Getreide, wobei mittels des Mähdreschers **1** Körner aus den Ähren gedroschen werden und das Erntegut somit zumindest im Wesentlichen in Körner und Pflanzenreste, insbesondere Stroh, getrennt wird.

Hierfür umfasst der Mähdrescher **1** ein Schneidwerk **28,** mittels dessen das Erntegut abgeschnitten und aufgenommen werden kann. Außerdem weist der Mähdrescher **1** eine Drescheinrichtung **2** auf, die eine Vortrommel **4,** eine Dreschtrommel **5** und einen Abscheidekorb **6** umfasst. Wie in **Figur 1** erkennbar ist, ist das Schneidwerk **28** mittels eines Schrägförderers **23** derart mit der Vortrommel **4** verbunden, dass diese mit Erntegut beschickt wird. In Richtung eines Erntegutflusses ist die Vortrommel **4** vor der Dreschtrommel **5** angeordnet. Mit anderen Worten wird das Erntegut mittels des Schneidwerks **28** vom Feld übernommen und sodann mittels des Schrägförderers **23** zur Vortrommel **4** transportiert.

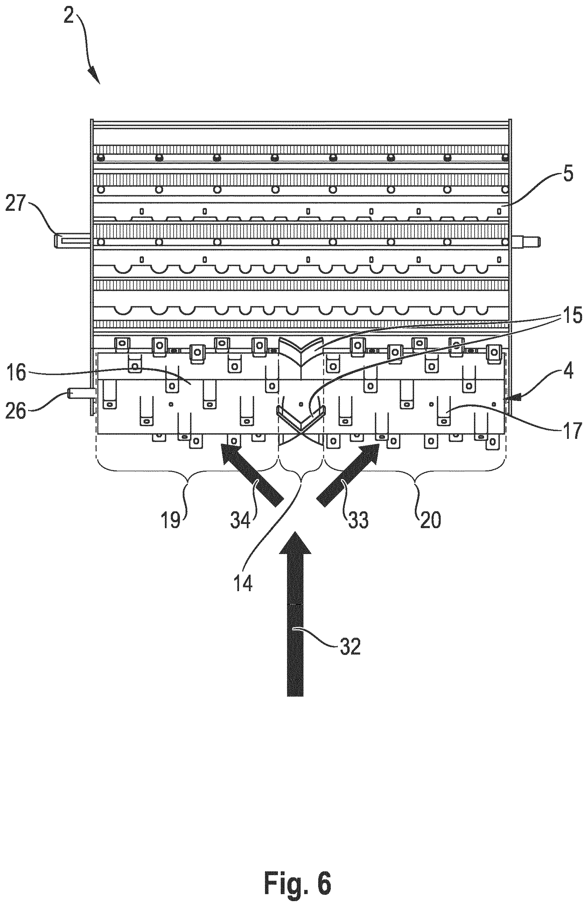

Während eines Betriebes werden sowohl die Vortrommel **4** als auch die Dreschtrommel **5** drehangetrieben, und zwar in dieselbe Richtung. Die Vortrommel **4** ist mittels einer Welle **26** gelagert, und in Strömungsrichtung des Ernteguts unmittelbar vor der Dreschtrommel **5** angeordnet, die ebenfalls mittels einer Welle **27** gelagert ist. Die Wellen **26, 27** sind parallel zueinander angeordnet, sodass die Vortrommel **4** und die Dreschtrommel **5** zusammenwirken. Dies ist in **Figur 6** erkennbar. Die Wellen **26, 27** sind quer zu einer Längsrichtung des Mähdreschers **1** orientiert, sodass sowohl die Vortrommel **4** als auch die Dreschtrommel **5** in eine auf ihre Rotation bezogen tangentiale Richtung mit dem Erntegutstrom 32 beschickt werden. Entsprechend handelt es sich um eine tangentiale Vortrommel **4** und eine tangentiale Dreschtrommel **5.**

Hierbei wird bereits durch die Vortrommel **4** das Erntegut zumindest teilweise ausgedroschen, sodass die gelösten Körner durch den Abscheidekorb **6,** der sowohl die Vortrommel **4** als auch die Dreschtrommel **5** zumindest bereichsweise ummantelt, abgeschieden werden. Von der Vortrommel **4** wird das Erntegut an die Dreschtrommel **5** übergeben, in der es weiter und hauptsächlich ausgedroschen wird. Hierbei wird das Erntegut durch eine Rotation der Vortrommel **4** an die Dreschtrommel **5** übergeben.

Der Mähdrescher **1** gemäß dem Stand der Technik umfasst weiterhin eine Zuführtrommel **21,** wie in **Figur 1** erkennbar ist. Die Zuführtrommel **21** ist in Richtung des Erntegutflusses der Dreschtrommel **5** nachgeschaltet und dazu eingerichtet, das Erntegut von der Dreschtrommel **5** an die Trenneinrichtung **3** zu übergeben. Die Trenneinrichtung **3** weist bei dem hier gezeigten Mähdrescher **1** gemäß dem Stand der Technik einen Hordenschüttler **22** auf, wie in **Figur 1** erkennbar ist. Bei dem Mähdrescher **1** gemäß dem Stand der Technik erfolgt eine Abscheidung der Körner von dem restlichen Erntegut, das heißt den Pflanzenresten, mittels des Hordenschüttlers **22.** Die Körner werden hierbei von dem nicht vollständig ausgedroschenen Erntegut und dem Stroh getrennt und fallen nach unten ab.

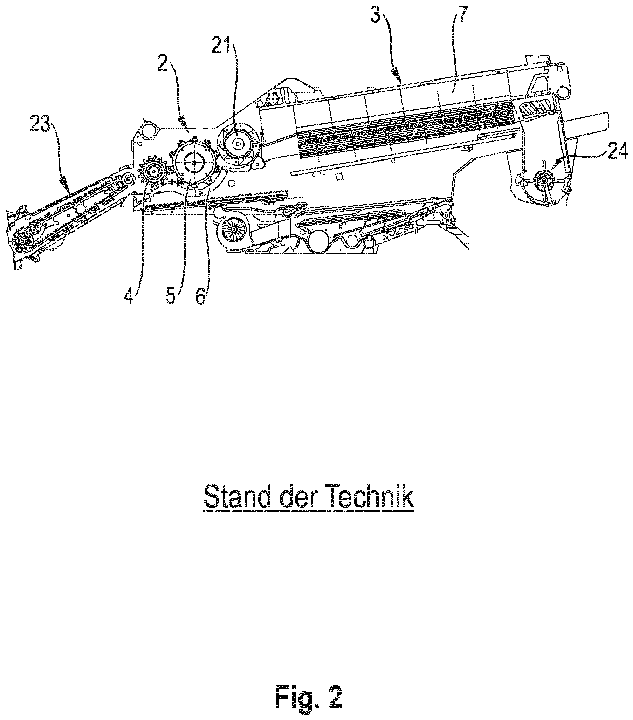

Alternativ zu der in **Figur 1** dargestellten Ausgestaltung gibt es gemäß dem Stand der Technik eine weitere Ausgestaltung, nämlich den sogenannten hybriden Mähdrescher, der in **Figur 2** veranschaulicht ist. Beim hybriden Druschsystem wird das Erntegut in der tangentialen Dreschtrommel **5** gedroschen und danach zu dem Trennrotor **7** geführt. Dies ist in **Figur 2** dargestellt. Der Trennrotor **7** hat gegenüber dem Hordenschüttler **22** den Vorteil, dass er eine wesentlich intensivere Trennung der gewünschten Körner von den unterwünschten Pflanzenresten ermöglicht und auf diese Weise Kornverluste verringert werden. Die verbleibenden Pflanzenreste werden an einem rückwärtigen Ende des Mähdreschers **1** einem Häcksler **24** zugeführt.

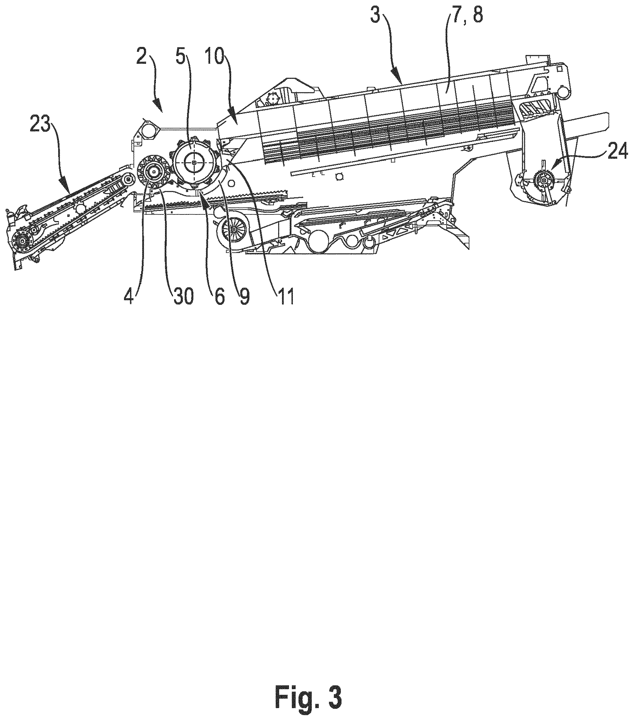

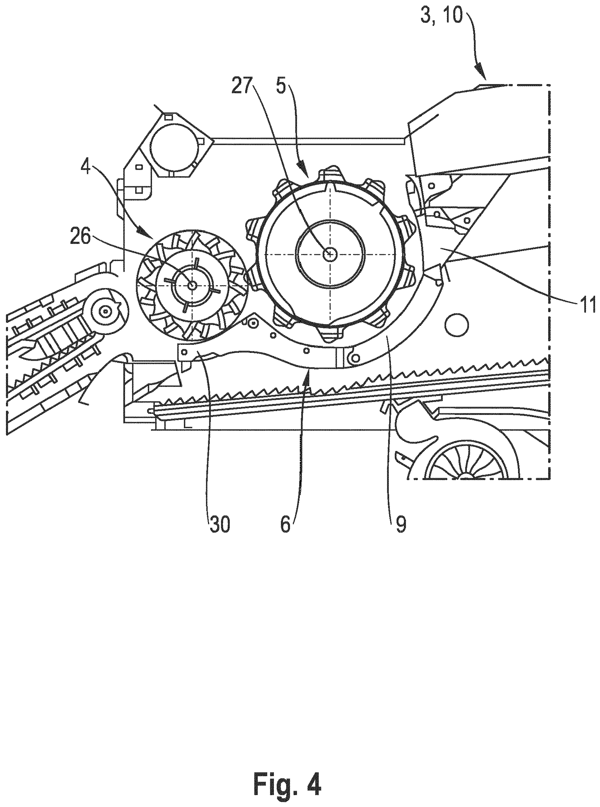

**Figur 3** zeigt in einer schematischen Schnittansicht von der Seite einen erfindungsgemäßen Mähdrescher **1.** In Zusammenschau mit **Figur 1** **und** **2** wird deutlich, dass der Mähdrescher **1** gemäß der erfindungsgemäßen Ausgestaltung keine Zuführtrommel **21** aufweist. Dies ist ebenfalls besonders gut in **Figur 4** erkennbar. Da die Zuführtrommel **21** bei Mähdreschern **1** gemäß dem Stand der Technik die Funktion innehat, das Erntegut der Trenneinrichtung **3** zuzuführen, wird diese Aufgabe erfindungsgemäß anderweitig gelöst.

Hierbei ist vorgesehen, dass der Abscheidekorb **6** in einem der Trenneinrichtung **3** zugewandten Endbereich ein Korbsegment **9** umfasst, das an ein der Drescheinrichtung **2** zugewandtes Ende eines Einlaufkopfs **10** der Trenneinrichtung **3** anschließt, sodass der Erntegutstrom **32** von der Drescheinrichtung **2** unmittelbar an die Trenneinrichtung **3** übergebbar ist. Mit anderen Worten kann das Erntegut mittels des Korbsegments **9** derart von der Dreschtrommel **5** weg geleitet werden, dass es in die Trenneinrichtung **3** eingeleitet werden kann.

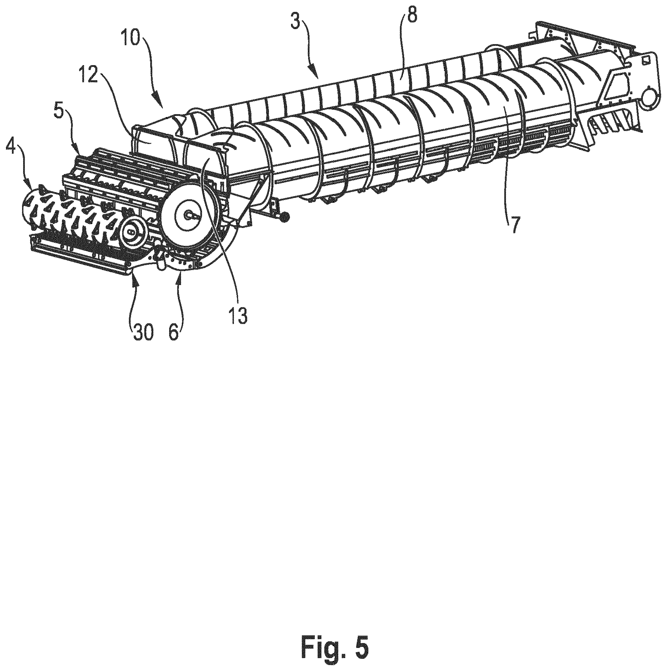

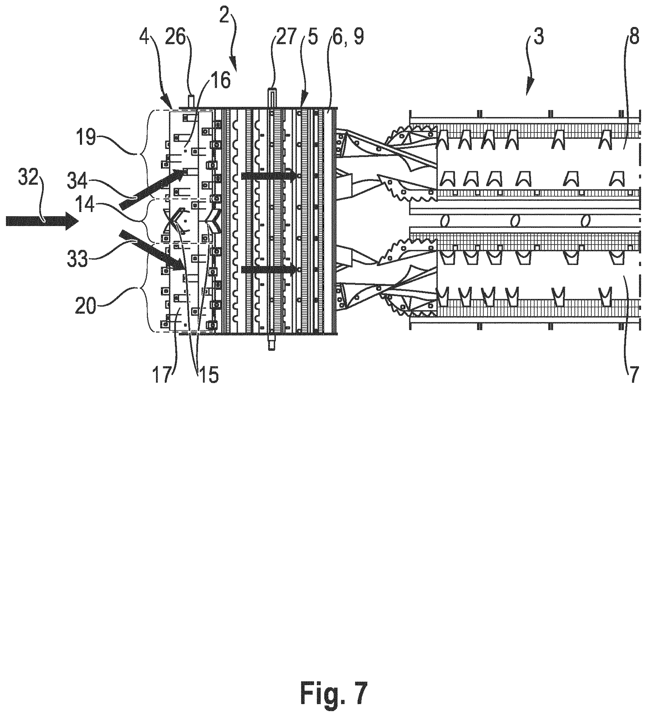

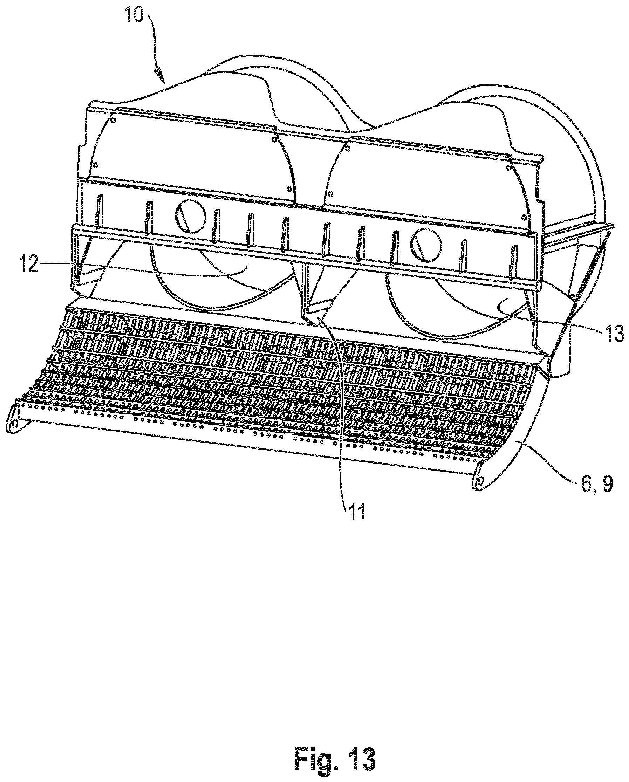

Weiterhin ist vorgesehen, dass der Einlaufkopf **10** mindestens einen in Querrichtung des Mähdreschers **1** betrachtet mittig angeordneten Gutstromteiler **11** umfasst, mittels dessen ein von der Drescheinrichtung **2** an die Trenneinrichtung **3** übergebener Erntegutstrom **32** teilbar ist. Der Einlaufkopf **10** ist besonders gut in **Figur 13** erkennbar und mittels eines Ansatzes an der Trenneinrichtung **3** anordbar. Wie **Figur 5** **und** **7** zeigen, weist der Mähdrescher **1** vorliegend zwei Trennrotoren **7, 8** auf, die sich parallel zueinander röhrenfömig in Längsrichtung des Mähdreschers **1** erstrecken. Demzufolge ist der Einlaufkopf **10** mit einem zweigeteilten Ansatz ausgestaltet, das heißt jeder Teil ist jeweils an einen der Trennrotoren **7, 8** anordbar. Dies wird insbesondere in Zusammenschau der **Figuren 5** **und** **13** deutlich.

Wie insbesondere anhand der **Figur 13** erkennbar ist, weist der Einlaufkopf **10** vorliegend zwei Zuführabschnitte **12, 13** auf, die zumindest im Wesentlichen zylindrisch ausgebildet sind. Demzufolge weist der Einlaufkopf **10** zwei innere Mantelflächen auf, die sich zumindest im Wesentlichen zylindrisch erstrecken und an die übrige Trenneinrichtung **3** anschließen. Dies ist in **Figur 5** erkennbar.

Der Erntegutstrom **32** wird mittels des Gutstromteilers **11** aufgeteilt. Hierbei wird der Erntegutstrom **32** somit entsprechend einer Form des Gutstromteilers **11** derart geführt, dass es jeweils zu dem Trennrotor **7, 8** geleitet wird. Mit anderen Worten wird der Erntegutstrom **32** mittels des Gutstromteilers **11** zumindest im Wesentlichen in zwei Teilströme aufgeteilt, wobei jeweils einer der Teilströme jeweils einem der Trennrotoren **7, 8** zugeführt wird.

Erfindungsgemäß ist vorgesehen, dass der Erntegutstrom **32** bereits Zuleitung zu dem Gutstromteiler **11** geteilt wird. Hierfür weist die Vortrommel **4** in einem Mittenbereich **14** umfangsseitig verteilte Gutleitelemente **15** auf, die dazu geeignet sind, den der Vortrommel **4** zugeführten Erntegutstrom **32** zu beiden Seiten **16, 17** des Mittenbereichs **14** hin abzulenken. Die ist besonders gut in **Figur 7** erkennbar. Der Erntegutstrom **32** trifft somit auf die Vortrommel **4,** wobei er zumindest im Mittenbereich **14** der Vortrommel **4** auf das Gutleitelement **15** trifft, mittels dessen der Erntegutstrom **32** geteilt bzw. beidseitig abgelenkt wird. Hierdurch ergeben sich Teilströme **33, 34.** Wie in **Figur 7** erkennbar ist, teilt das Gutleitelement **15** den Erntegutstrom **32** vorliegend derart, dass die beiden entstehenden Teilströme **33, 34** bereits in Richtung des jeweiligen Trennrotors **7, 8** orientiert sind. Mittels des Gutleitelements **15** wird der Erntegutstrom **32** somit von dem Mittenbereich **14,** in dem das Gutleitelement **15** angeordnet ist, zumindest teilweise in Richtung der Seiten **16, 17** der Vortrommel **4** gelenkt. Mit anderen Worten ist das Gutleitelement **15** derart beschaffen beziehungsweise angeordnet, dass vorliegend der Teilstrom **33** zumindest im Wesentlichen in Richtung des Trennrotors **7** und der Teilstrom **34** zumindest im Wesentlichen in Richtung des Trennrotors **8** geführt wird.

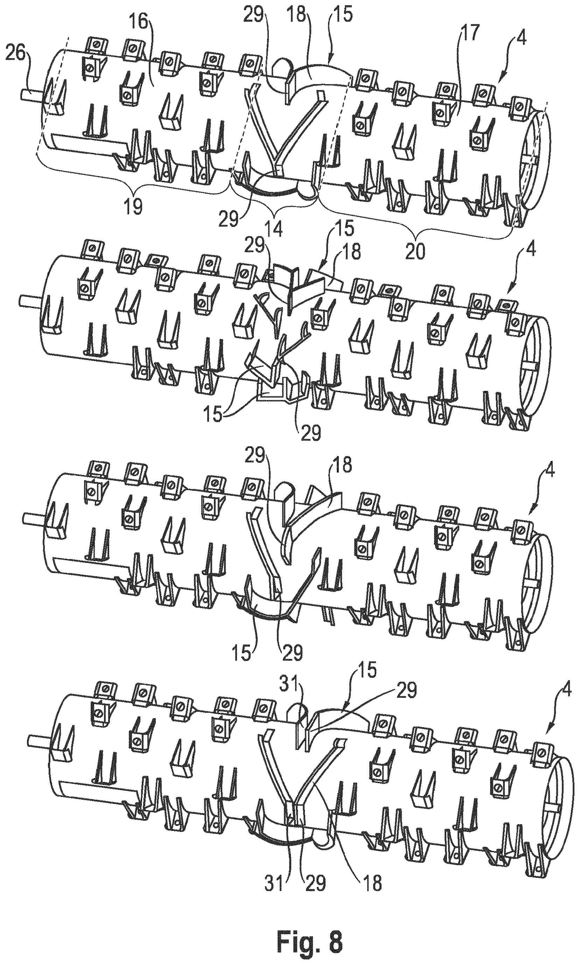

Wie in **Figur 6** erkennbar ist, kann die Vortrommel **4** beziehungsweise deren Gutleitelemente **15** verschiedenartig ausgebildet sein. Die Gutleitelemente **15** umfassen in einer ersten Variante jeweils zwei Leitabschnitte **18.** Diese sind derart ausgebildet, dass sie gemeinsam einen Vorderabschnitt **29** aufweisen, der zumindest im Wesentlichen spitz zuläuft (vergleiche **Figur 6**, erste Darstellung von oben). Ausgehend von dem Vorderabschnitt **29** erstrecken sich die Leitabschnitte **18** in entgegengesetzte Richtungen zu Seitenbereichen **19, 20** der Vortrommel **4** und bilden auf diese Weise gemeinsam eine Keilform aus. Alternativ können die Gutelemente **15** jeweils von mehreren, kürzeren, versetzt angeordneten und nicht-zusammenlaufenden Leitabschnitten **18** gebildet sein (vergleiche **Figur 6****,** zweite Darstellung von oben). Des Weiteren sind Gutleitelemente **15** gezeigt, deren Leitabschnitte **18** länglich, bogenförmig und zueinander versetzt, das heißt nicht zusammenlaufend, angeordnet sind (vergleiche **Figur 8**, dritte Darstellung von oben). Die Leitelemente **18** sind dabei alternierend zu den Seitenbereichen **19, 20** der Vortrommel **4** ausgerichtet.

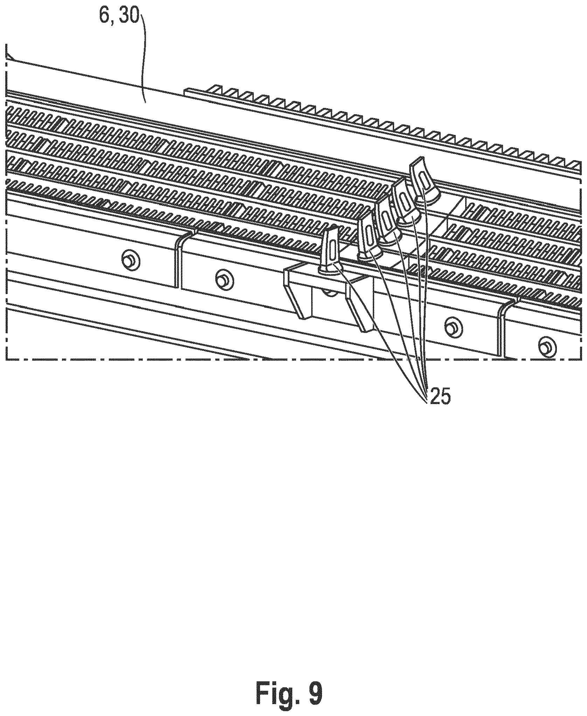

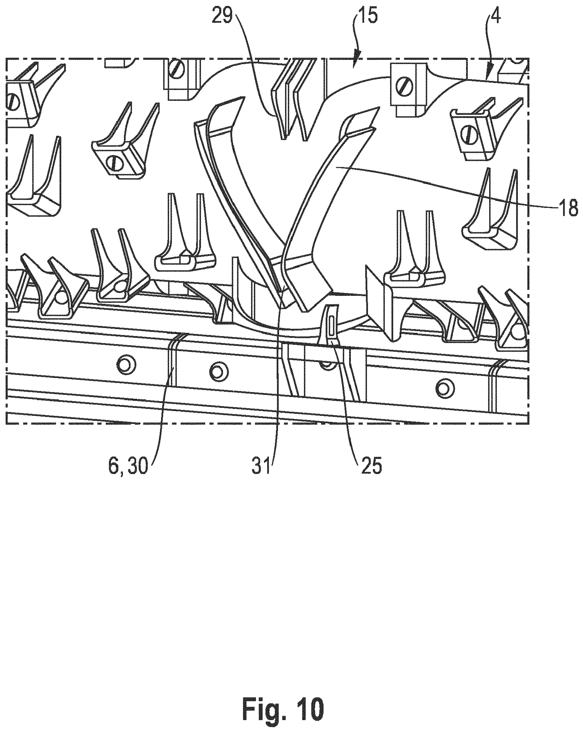

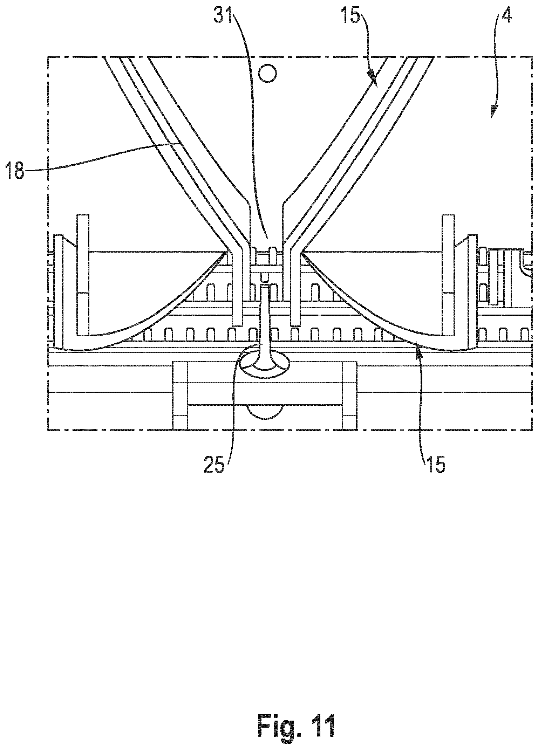

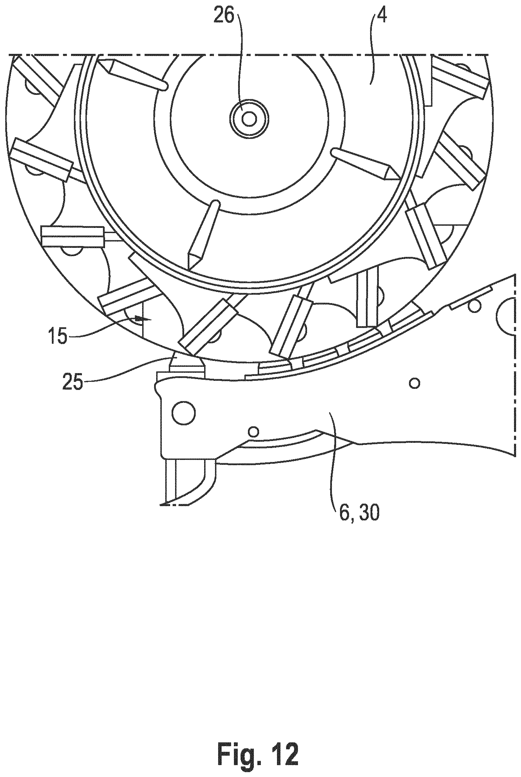

Gemäß einer Ausgestaltung, die in **Figur 9** gezeigt ist, weist der Abscheidekorb **6** in einem Frontbereich **30** fünf Trennelemente **25** auf. Die Trennelemente **25** sind vorliegend zahnförmig ausgebildet und ragen von dem Abscheidekorb **6** empor, wobei diese zumindest im Wesentlichen in Richtung des Erntegutstroms **32** hintereinander in einer Reihe angeordnet sind. Mittels der Trennelemente **25** kann die Teilwirkung der Gutleitelemente 15 unterstützt werden, da die Trennelemente **25** mittig an dem Abscheidekorb **6** angeordnet sind. In diesem Zusammenhang sind die Gutleitelemente **15** jeweils mit einem Passierspalt **31** ausgebildet, der sich zwischen aufeinander zu laufenden Leitelementen **18** erstreckt (vergleiche **Figur 8**, unterste Darstellung), sodass die Trennelemente **25** die Vortrommel **4** im Bereich des Passierspalts **31** passieren können. Dies ist besonders gut in Zusammenschau der **Figuren 10 bis 12** erkennbar.

### Bezugszeichenliste

- |: Mähdrescher
- |: Drescheinrichtung
- |: Trenneinrichtung
- |: Vortrommel
- |: Dreschtrommel
- |: Abscheidekorb
- |: Trennrotor
- |: Trennrotor
- |: Korbsegment
- |: Einlaufkopf
- |: Gutstromteiler
- |: Zuführabschnitt
- |: Zuführabschnitt
- |: Mittenbereich
- |: Gutleitelement
- |: Seite
- |: Seite
- |: Leitabschnitt
- |: Seitenbereich
- |: Seitenbereich
- |: Zuführtrommel
- |: Hordenschüttler
- |: Schrägförderer
- |: Häcksler
- |: Trennelement
- |: Welle
- |: Welle
- |: Schneidwerk
- |: Vorderabschnitt
- |: Frontbereich
- |: Passierspalt
- |: Erntegutstrom
- |: Teilstrom
- |: Teilstrom

## Patentansprüche

1. Selbstfahrender Mähdrescher (1), umfassend
- eine tangentiale Drescheinrichtung (2) sowie
- eine axiale Trenneinrichtung (3),
wobei die Drescheinrichtung (2) eine tangentiale Vortrommel (4), eine in Strömungsrichtung eines Erntegutstroms der Vortrommel (4) nachgeschaltete tangentiale Dreschtrommel (5) sowie einen sowohl die Vortrommel (5) als auch die Dreschtrommel (5) zumindest bereichsweise ummantelnden Abscheidekorb (6) aufweist,
wobei die Trenneinrichtung (3) in Strömungsrichtung des Erntegutstroms betrachtet der Drescheinrichtung (2) nachgeschaltet ist und mindestens einen axialen Trennrotor (7, 8) umfasst,
**dadurch gekennzeichnet, dass**
die Vortrommel (4) in einem Mittenbereich (14) umfangsseitig verteilte Gutleitelemente (15) aufweist, die dazu geeignet sind, einen der Vortrommel (4) zugeführten Erntegutstrom zu beiden Seiten (16, 17) des Mittenbereichs (14) hin abzulenken.

2. Mähdrescher (1) nach Anspruch 1, **dadurch gekennzeichnet, dass** zumindest ein Leitabschnitt (18) mindestens eines der Gutleitelemente (15), vorzugsweise einer Mehrzahl der Gutleitelemente (15), weiter vorzugsweise sämtlicher Gutleitelemente (15), sich in Drehrichtung der Vortrommel (4) betrachtet ausgehend von dem Mittenbereich (14) der Vortrommel (4) schräg in Richtung eines Seitenbereichs (19, 20) der Vortrommel (4) erstreckt.

3. Mähdrescher (1) nach einem der vorangehenden Ansprüche, **dadurch gekennzeichnet** mindestens ein Gutleitelement (15), vorzugsweise eine Mehrzahl der Gutleitelemente (15), weiter vorzugsweise sämtliche Gutleitelemente (15), keilförmig ausgebildet ist bzw. sind, wobei ein spitz zulaufender Vorderabschnitt (29) des jeweiligen Gutleitelements (15) in Drehrichtung der Vortrommel (4) gerichtet ist und das jeweilige Gutleitelement (15) sich ausgehend von dem Vorderabschnitt (29) keilförmig aufweitet.

4. Mähdrescher (1) nach einem der vorangehenden Ansprüche, **dadurch gekennzeichnet, dass** der Abscheidekorb (6) in einem Frontbereich (30), in dem er mit der Vortrommel (4) zusammenwirkt, mindestens ein in Richtung der Vortrommel (4) vorstehendes Trennelement (25) aufweist, wobei das Trennelement (25) mittig in dem Frontbereich (30) angeordnet ist, sodass das Trennelement (25) mit dem Mittenbereich (14) der Vortrommel (4) zusammenwirkt.

5. Mähdrescher (1) nach Anspruch 4, **gekennzeichnet durch** eine Mehrzahl von Trennelementen (25), die in Strömungsrichtung des Erntegutstroms betrachtet hintereinander in dem Frontbereich (30) angeordnet sind.

6. Mähdrescher (1) nach Anspruch 4 bis 5, **dadurch gekennzeichnet, dass** die Gutleitelemente (15) jeweils einen Passierspalt (31) aufweisen, der des während eines bestimmungsgemäßen Betriebs des Mähdreschers (1) ermöglicht, dass das mindestens eine Trennelement (25) im Zuge der Rotation der Vortrommel (4) durch den Passierspalt (31) hindurchtritt.

7. Mähdrescher (1) nach einem der vorangehenden Ansprüche, **dadurch gekennzeichnet, dass** der Abscheidekorb (6) in einem der Trenneinrichtung (3) zugewandten Endbereich ein Korbsegment (9) umfasst, das an ein der Drescheinrichtung (2) zugewandtes Ende eines Einlaufkopfs (10) der Trenneinrichtung (3) anschließt, sodass der Erntegutstrom von der Drescheinrichtung (2) unmittelbar an die Trenneinrichtung (3) übergebbar ist.

8. Mähdrescher (1) nach Anspruch 7, **dadurch gekennzeichnet, dass** der Einlaufkopf (10) mindestens einen in Querrichtung des Mähdreschers (1) betrachtet mittig angeordneten Gutstromteiler (11) umfasst, mittels dessen ein von der Drescheinrichtung (2) an die Trenneinrichtung (3) übergebener Erntegutstrom teilbar ist.

9. Mähdrescher (1) nach Anspruch 8, **dadurch gekennzeichnet, dass** sich der Gutstromteiler (11) bis an eine dem Abscheidekorb (6) zugewandten Rand des Einlaufkopfs (10) erstreckt.

10. Mähdrescher (1) nach einem der Ansprüche 7 bis 9, **dadurch gekennzeichnet, dass** der Einlaufkopf (10) zwei Zuführabschnitte (12, 13) aufweist, durch die hindurch der von der Drescheinrichtung (2) übernommene Erntegutstrom dem mindestens einen Trennrotor (7, 8) zuführbar ist.

11. Mähdrescher (1) nach Anspruch 10, **dadurch gekennzeichnet, dass** die Trenneinrichtung (3) zwei in Längsrichtung des Mähdreschers (1) betrachtet nebeneinander angeordnete axiale Trennrotoren (7, 8) umfasst, wobei die Zuführabschnitte (12, 13) des Einlaufkopfs (10) jeweils einem der Trennrotoren (7, 8) zugeordnet sind.

12. Mähdrescher (1) nach einem der Ansprüche 10 oder 11, **dadurch gekennzeichnet, dass** der Einlaufkopf (10) einen Gutstromteiler (11) aufweist, der mittig zwischen den Zuführabschnitten (12, 13) angeordnet ist, sodass der Erntegutstrom mittels des Gutstromteilers (11) zu den beiden Zuführabschnitten (12, 13) hin teilbar ist.

13. Mähdrescher (1) nach einem der vorhergehenden Ansprüche, **dadurch gekennzeichnet, dass** der Abscheidekorb (6) in seiner Ausrichtung relativ zu der Dreschtrommel (5) änderbar ist.

14. Mähdrescher (1) nach einem der vorhergehenden Ansprüche, **dadurch gekennzeichnet, dass** das Korbsegment (9) bündig an das der Drescheinrichtung (2) zugewandte Ende des Einlaufkopfs (10) anschließt.
